# EUROPEAN PATENT SPECIFICATION

(11) **EP 3 453 358 B1**
(45) Date of publication and mention of the grant of the patent: **10.03.2021**
(21) Application number: 17190720.7
(22) Date of filing: 12.09.2017
(51) Int. Cl.: A61C 8/00

(54) **IMPROVED TISSUE LEVEL IMPLANT**
VERBESSERTES IMPLANTAT AUF GEWEBEEBENE
IMPLANT DE NIVEAU TISSULAIRE AMÉLIORÉ

(43) Date of publication of application: 13.03.2019
(73) Proprietor: Straumann Holding AG, 4002 Basel (CH)
(72) Inventor: OBRECHT, Marcel, 4002 Bassel (CH); FROMOVICH, Ophir, Moshav Adanim (IL)
(74) Representative: Modiano, Gabriella Diana

(56) References cited:
- WO-A1-2015/118543
- US-A1- 2005 287 497
- US-A1- 2007 037 123
- US-A1- 2007 298 379

## Description

### Field of the Invention

### Background of the Invention

Generally, tissue level implants are used in dental surgery to reconstruct dental parts of a human being. Usually, a tissue level implant includes two distinct sections, namely a bone apposition section defining a bone apposition surface and a soft tissue apposition section defining a soft tissue apposition surface. These sections have different surface properties, each surface being designed to promote good tissue attachment with the tissue, bone and soft tissue respectively, with which the section will come into contact during use. Typically the bone apposition section has a rougher surface than the soft tissue apposition section.

A dental implant, in particular a bone level implant with a self-drilling feature, is known form WO 2015/118543 A1. In the known implant of WO 2015/118543 A1, the self-drilling feature thereof is configured for condensing, collecting and distributing bone along all of the implant's surface and within the implantation site, to significantly increase the implant contact surface with the bone. The known implant is configured in all its embodiments to have a neck portion and a body portion that are continuous with one another. Furthermore, in all embodiments of the known implant the neck portion is configured to have a smaller overall diameter than the overall diameter of said body portion. This design feature is said to be of benefit as the neck portion in use associates with the cortical compact and/or dense bone. The body portion comprises a thread that facilitates the self-drilling and bone collection properties when the implant is rotated in both the clockwise and counterclockwise directions.

The dental implant of WO2015/118543 still has drawbacks when implemented as a tissue level implant, as its particular coronal configurations having a smaller overall diameter than the overall diameter of the body portion does not permit an optimal soft tissue conditioning for preparing a natural emergence profile.

### Summary of the Invention

The aim of the present invention is to provide an improved tissue level implant which avoids the drawbacks of the prior art devices, and thus allows an optimal soft tissue regeneration while preserving the bone self-drilling features of WO 2015/118543 A1.

The above aim and further objects which are described in the following description are achieved by a tissue level implant as defined in independent claim 1.

Viewed from a first aspect the present invention provides a tissue level implant comprising a smooth section and a body section that are continuous with one another, the smooth section defining the proximal end of the implant and the body section defining the distal end of the implant, the smooth section comprising a flared out section widening in the coronal direction, such that the coronal end of the flared out section has a greater radius than the coronal end of the body section, the smooth section being devised as a soft tissue apposition surface, the body section being devised as a bone tissue apposition surface; said body section comprising a threaded portion having an inner core fit with threading extending therefrom along its length; said core defining an internal diameter of said threaded portion and said threading defining the external diameter of said threaded portion; wherein said core is continuous along the length of said threaded portion and has a decreasing diameter such that the proximal diameter of said core is larger than the distal diameter of said core; the core being substantially flat at an apical end of the dental implant.

In accordance with conventional dental terminology, "apical" refers to the direction towards the bone and "coronal" to the direction towards the teeth. Therefore, the apical end of a component is the end which, in use, is directed towards the jaw bone and the coronal end is that which is directed towards the oral cavity. Throughout this specification the term "distal" is synonymous with the term "apical" and the term "proximal" is synonymous with the term "coronal".

Preferably the body section has a rougher surface than the smooth section. In particular, the whole of the body section is preferably sandblasted and/or acid etched, most preferably both. In contrast the smooth section is preferably machined in order to obtain a highly smooth surface thereon.

The flared out section can take the form of a truncated cone, such that cross-sections taken in all planes containing the longitudinal axis of the implant, herein referred to as the "longitudinal cross-section", would show the flared out section having a straight, tapered cross-section. However, preferably the flared out section has a substantially tulip-like shape. In other words, the flared out section preferably tapers radially outwards in the coronal direction over a radius, thus creating a curved longitudinal cross-section. In preferred embodiments the radius of curvature of the flared out section is between 1.2 and 4mm. In general, the greater the axial length of the flared out section the greater the radius of curvature. Therefore, in embodiments in which the length of the flared out section is 1.5mm or less, the radius of curvature is preferably 2mm or less, most preferably between 1.2 and 1.9mm. In embodiments in which the length of the flared out section is greater than 1.5mm, the radius of curvature is preferably between 3 and 4mm, most preferably 3.5mm.

The coronal end of the flared out section has a greater radius than the coronal end of the body portion, and most preferably a greater radius than the maximum outer radius of the body portion.

The greater radius and flared shape of the smooth section results in a better shaping of the soft tissue.

Preferably the smooth section includes, coronal of the flared out section, a beveled part which tapers radially inwards in the coronal direction to form a truncated cone. The beveled part provides for a more stable connection to a secondary part. Further, the beveled part may also advantageously provide for a better sealing with the secondary part.

In some preferred embodiments, the beveled part forms an angle of 17 to 27 degrees, more preferably an angle of 20 to 24 degrees and most preferably an angle of 22.5 degrees with respect to a plane that is perpendicular to the longitudinal axis of the dental implant. In other preferred embodiments, the beveled part forms an angle of 40 to 50 degrees, more preferably an angle of 42 to 47 degrees and most preferably an angle of 45 degrees with respect to a plane that is perpendicular to the longitudinal axis of the dental implant. The above most preferred inclination angles of the beveled part are particularly advantageous in terms of mechanical stability and sealing when the dental implant is connected to a secondary part which may be embodied, for instance, as an abutment adapted for supporting a single tooth or for supporting a dental bridge.

In some embodiments the flared out section and beveled part are directly adjacent to one another. However, in preferred embodiments a short circular cylindrical section, having the same diameter as the coronal end of the flared out section, is located between and directly adjoins both the flared out section and the beveled part. The short circular cylindrical section is less than 0.5mm in length, preferably less than 0.2mm in length, as measured in the longitudinal direction.

In certain preferred embodiments, in addition to the flared out section, the smooth section includes at its coronal end a flat shoulder which defines the coronal end of the dental implant. The flat shoulder of the smooth section lies preferably on a plane which is perpendicular to the longitudinal axis of the dental implant. In this way an axial stop is provided for secondary components, such as abutments and impression posts, which may be attached to the implant during use. Further, the flat shoulder of the smooth section is preferably relatively narrow, e.g. less than 0.5mm, most preferably less than 0.2mm in width. The shoulder width is preferably uniform about the entire circumference of the dental implant.

In particularly preferred embodiments the smooth section includes, in addition and coronal to the flared out section, both a beveled part and a flat shoulder as described above. In such embodiments the flat shoulder preferably defines the coronal end of the dental implant and is preferably directly adjacent to the beveled part. As described above, the flat shoulder lies preferably on a plane which is perpendicular to the longitudinal axis of the dental implant. Further, the flat shoulder is preferably relatively narrow as compared to the beveled part. Along a radius extending from the longitudinal axis of the dental implant preferred ratios of the radial width of the flat shoulder to the radial width of the projection of the beveled part on the radius are from 1:5 to 1:20. In other words, the radial width of the projection of the beveled part is between 5 and 20 times the length of the radial width of the flat shoulder.

The flat shoulder also provides advantageously, in conjunction with the beveled part, for a centering platform for a secondary part that is placed on the dental implant. Such secondary part may comprise, as mentioned above, an abutment adapted for supporting a single tooth including a dental crown or for supporting a dental bridge.

In a particularly preferred embodiment the smooth section comprises a flared out section having a tulip-like shape followed by a circular cylindrical section followed by a beveled part having a truncated cone outline followed by a flat shoulder which defines the coronal end of the dental implant.

In addition to the threaded section the body section preferably further comprises a neck portion directly adjacent to the proximal end of the threaded portion and the apical end of the smooth section. This neck portion may be unthreaded or it may comprise threading, different to the threading of the threaded section, along the whole or part of its length. The threading of the neck section, where present, differs from the threading of the threaded section in one or more of the following characteristics: depth, profile, pitch, lead. Most usually any threading in the neck portion will have a smaller depth than the threading of the threaded portion, as well as potentially other differences. Most preferably the threading of the neck portion forms a micro-thread.

Where threading is present on the neck portion it preferably begins at the apical end of the neck portion, directly adjacent to the coronal end of threaded portion, and extends either along the entire length of the neck portion or until a point apical of the coronal end of the neck portion. Preferably, where present, the threading extends over at least the apical half of neck portion. Preferably, where present, the threading does not extend over at least the coronal most quarter of the neck portion. Thus, preferably, the threading begins at the apical end of the neck portion and extends over between 50 and 75% of the length of the neck portion.

The neck portion preferably has a diameter equal to or less than the external diameter of the threaded portion. When the diameter of the neck portion is less than the diameter of the threaded portion the difference in diameter is preferably no more than 1mm, more preferably no more than 0.5mm.

As the neck portion is a part of the body section of the implant is it devised as a bone tissue apposition surface and therefore preferably has a rougher surface than the smooth section.

Preferably the neck portion is subject to the same surface roughening treatment, e.g. sandblasting and/or acid etching, as the threaded section.

Further advantageous aspects of the present invention are defined in the appended dependent claims, all of which can be applied alone or in combination to each of the preferred aspects of the smooth section and neck portion described above.

### Brief Description of the Drawings

Further characteristics and advantages of the present invention will become more apparent from the following description of a preferred, but not exclusive, embodiment of the tissue level implant according to the invention, illustrated by way of non-limitative example in the accompanying drawings, wherein:
Fig. 1A -B show schematic block diagram of aspects of tissue level implants;
FIG. 2A is a perspective view of a tissue level implant incorporating features of the present invention;
FIG. 2B-C are illustrative schematic diagrams of the threaded body portion of a tissue level implant incorporating features of the present invention;
FIG. 2D is a cross sectional view of the implant of Fig. 2A showing the threading profile;
FIG. 3A-D show further perspective views of the tissue level implant of Fig. 2A;
FIG. 4A-C are illustrative diagrams showing bottom views of the body section of the tissue level implant of Fig. 2A;
FIG. 5A-C are schematic illustrative diagrams showing threading and flute parameter configuration of the implant incorporating features of the present invention;
FIG. 6A-E are illustrative schematic diagrams showing views of an abutment suitable for use with a tissue level implant incorporating the features of the present invention;
FIG. 7A-P show schematic illustrative diagrams of exemplary dental implant threading according to optional embodiments of the present invention; and
FIG 8 shows detail of an interfacing platform which is incorporated in a preferred embodiment of the tissue level implant of the present invention.

### Detailed Description of the Invention

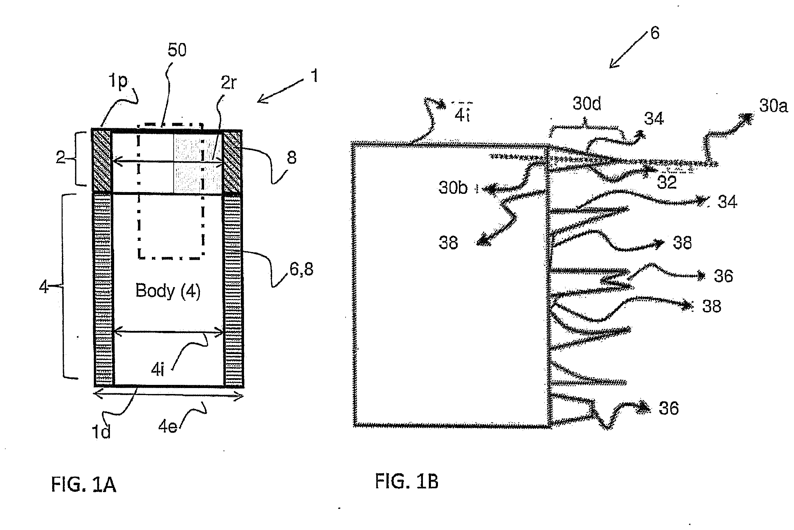

FIG. 1A shows a schematic block diagram representation of a dental implant showing the main aspects of dental implants also applicable to the present invention.

A dental implant 1 includes a coronal portion 2 and a body portion 4 that are continuous with one another. The coronal portion 2 defines the proximal end 1p of the implant and the body portion 4 defines the distal end of 1d the implant 1. The body portion 4 comprises an inner core 4i that is fit with at least one threading 6 that extends horizontally along a horizontal plane 30a and progresses along at least a part of the length of the implant body portion 4. The inner core 4i defines an internal diameter of body portion 4 while the threading 6 defines the external diameter 4e of the body portion 4.

The shape and /or profile of body portion 4 may be highly variable and may assume a plurality of shapes and/or configurations and/or profiles for example including but not limited to straight, tapered, conical, cylindrical, linear, parallel, symmetric, asymmetric, trapezoidal, mixed conical, segmented, multi segmented and any combination thereof.

Implant 1 may further comprise micro-threads 8 along at least a portion of either the coronal portion 2 and/or body portion 4. Optionally body portion 4 may comprise both micro-threads 8 and threading 6.

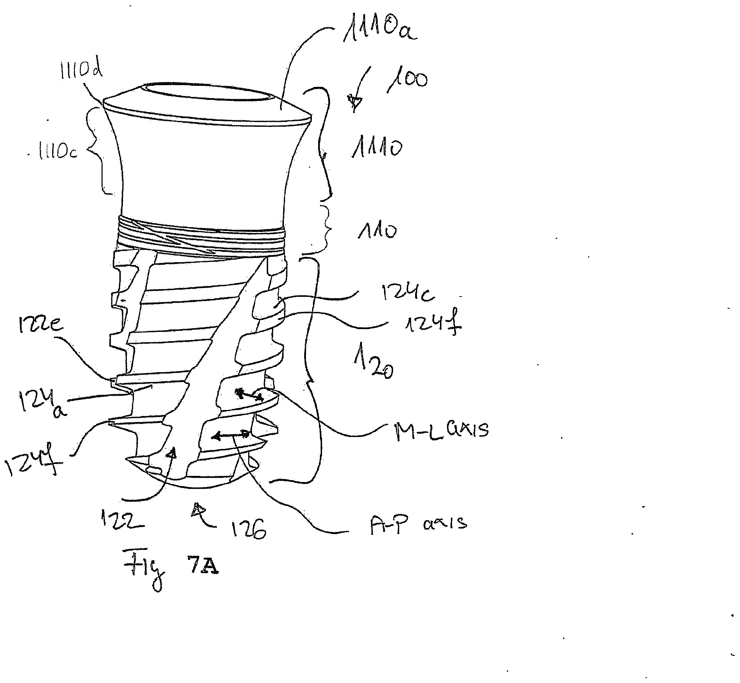

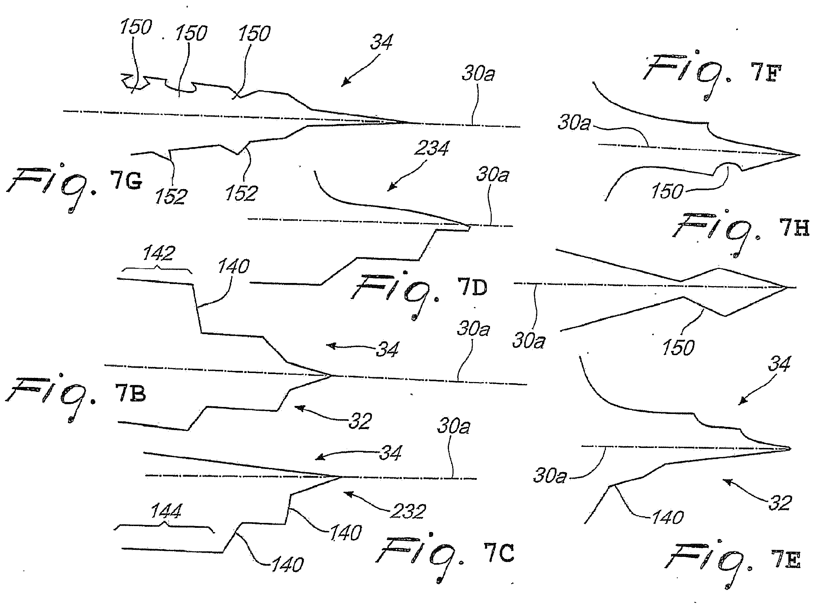

FIG. 1B shows a schematic block diagram representation of a dental implant threading 6 specifically showing aspects of dental implant thread. FIG. 1B shows different profiles of threading 6 that are known in the art having different characteristics. Thread 6 extends from the inner core 4i of body portion 4 along a horizontal plane 30a represented by the dashed line. The horizontal plane 30a comprises two axes a first axis along the medial-lateral axis. 'M-L', and a second axis, along the anterior-posterior axis 'A-P' extending around implant body 4, for example as shown in FIG. 7A.

The basic thread structure is an extension that has an apical side 32, a coronal side 34, and a lateral edge 36 that connects the apical side and the coronal side, a base 30b connecting the thread 6 to the inner core 4i, a thread depth 30d that is defined between the lateral edge 36 and the base 30b.

The thread may also be defined by a plurality of additional parameters that provide and/or determine the thread characteristics that depict how the thread behaves relative to the bone. Thread parameters may for example include but are not limited to: the contour of the inter-thread-face 38, the overall shape of the inner core 4i, how the threads progresses along the length of the implant body, the number of starts, number of flutes, thread pitch, thread dispersal along the implant body, the like or any combination thereof.

Thread parameters and some known configurations are schematically shown in FIG. 1B, where the thread may comprises a straight segment or curved edge that are defined along the coronal side 34 and/or the apical side 32 of the thread. The thread may be configured to be symmetric or asymmetric relative to the horizontal plane 30a. The angulation of the thread, along any of its parts including the apical side 32, coronal side 34, lateral edge 36 and inter-thread face 38 may be controlled.

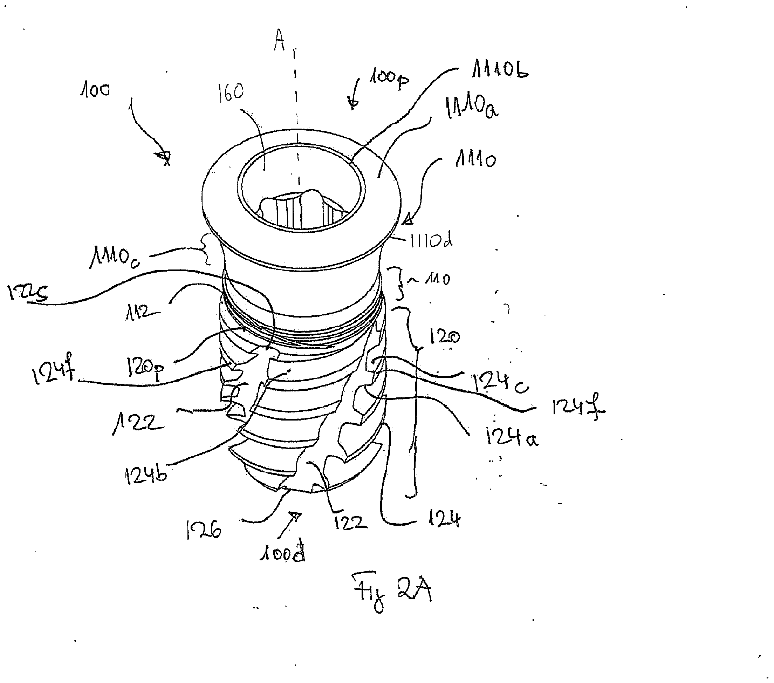

FIG. 2A shows an illustrative diagram of a tissue level implant 100 incorporating the features of the present invention. The dental implant 100 comprises a proximal end lOOp and a distal end 100d, the distal end 100d also referred to as the apical end or apical end surface 126 of the dental implant 100.

Implant 100 has a substantially cylindrical or conical or circular cylindrical form, including a smooth section 1110 intended for contact with the soft tissue and a body section intended for contact with the bone tissue. In general and preferably the body section has a rougher surface than the smooth section 1110. In particular, the whole of the body section is preferably sandblasted and/or acid etched. In contrast the smooth section 1110 is preferably machined in order to obtain a highly smooth surface thereon.

In the present embodiment the body section comprises neck portion 110 and a threaded portion 120, the threaded portion 120 having threading 124 that is fit with at least two or more flutes 122 disposed along the full length of threading 124.

The smooth section 1110 comprises a flared out section 1110c widening from its apical end to its coronal end. The flared out section 1110c can take the form of a truncated cone, such that cross-sections taken in all planes containing the longitudinal axis A of the implant 100, herein referred to as the "longitudinal cross-section", would show the flared out section 1110c to have a straight, tapered cross-section. However, preferably the flared out section 1110c has a substantially tulip-like shape. In other words, the flared out section tapers radially outwards in the coronal direction over a radius, thus creating a curved longitudinal cross-section. In preferred embodiments the radius of curvature of the flared out section is between 1.2 and 4mm. In general, the greater the axial length of the flared out section 1110c the greater the radius of curvature. Therefore, in embodiments in which the length of the flared out portion 1110c is 1.5mm or less, the radius of curvature is preferably 2mm or less, most preferably between 1.2 and 1.9mm. In embodiments in which the length of the flared out portion 1110c is greater than 1.5mm, the radius of curvature is preferably between 3 and 4mm, most preferably 3.5mm.

The coronal end of the flared out section 1110c has a greater radius than the coronal end of the body portion, and most preferably a greater radius than the maximum outer radius 4e of the body portion.

The greater radius and flared shape of the smooth section 1110 results in a better shaping of the soft tissue.

In preferred embodiments, the smooth section 1110 includes, coronal of the flared out section 1110c, a beveled part 1110a which tapers radially inwards in the coronal direction to form a truncated cone. The beveled part 1110a of the smooth section 1110 advantageously provides for a more stable connection to a secondary part. Further, the beveled part 1110a may also advantageously provide for a better sealing with the secondary part.

In some preferred embodiments, the beveled part 1110a forms an angle of 17 to 27 degrees, more preferably an angle of 20 to 24 degrees and most preferably an angle of 22.5 degrees with respect to a plane that is perpendicular to the axis A of the dental implant 100. In other preferred embodiments, the beveled part 1110a forms an angle of 40 to 50 degrees, more preferably an angle of 42 to 47 degrees and most preferably an angle of 45 degrees with respect to a plane that is perpendicular to the axis A of the dental implant 100. The above most preferred inclination angles of the beveled part 1110a are particularly advantageous in terms of mechanical stability and sealing when the dental implant is connected to a secondary part which may be embodied, for instance, as an abutment adapted for supporting a single tooth or for supporting a dental bridge.

In some embodiments the flared out section 1110c and beveled part 1110a are directly adjacent to one another. However, in preferred embodiments a short circular cylindrical section 1110d, having the same diameter as the coronal end of the flared out section 1110c, is located between and directly adjoins both the flared out section 1110c and the beveled part 1110a. The short circular cylindrical section 1110d is less than 0.5mm in length, preferably less than 0.2mm in length, as measured in the longitudinal direction.

In preferred embodiments, in addition to the flared out section 1110c, the smooth section 1110 includes at its coronal end a flat shoulder 1110b which defines the coronal end of the dental implant 100. The flat shoulder 1110b of the smooth section 1110 lies preferably on a plane which is perpendicular to the axis A of the dental implant 100. In this way an axial stop is provided for secondary components, such as abutments and impression posts, which may be attached to the implant during use. Further, the flat shoulder 1110b of the smooth section 1110 is preferably relatively narrow, e.g. less than 0.5mm, most preferably less than 0.2mm in width.

In particularly preferred embodiments the smooth section 1110 includes, in addition and coronal to the flared out section 1110c, both a beveled part 1110a and a flat shoulder 1110b as described above. In such embodiments the flat shoulder 1110b preferably defines the coronal end of the dental implant 100 and is preferably adjacent to the beveled part 1110a. As described above, the flat shoulder 1110b lies preferably on the plane which is perpendicular to the axis A of the dental implant 100. Further, the flat shoulder 1110b is preferably relatively narrow as compared to the beveled part 1110a. Along a radius extending from the axis A of the dental implant 100 preferred ratios of the radial width of the flat shoulder 1110b to the radial width of the projection of the beveled part 1110a on the radius are from 1:5 to 1:20.

The flat shoulder 1110b also provides advantageously, in conjunction with the beveled part 1110a, for a centering platform for a secondary part that is placed on the dental implant.

Such secondary part may comprise, as mentioned above, an abutment adapted for supporting a single tooth including a dental crown or for supporting a dental bridge.

In a particularly preferred embodiment the smooth section 1110 comprises a flared out section 1110c having a tulip-like shape followed by circular cylindrical section 1110d followed by beveled part 1110a having a truncated cone outline followed by flat shoulder 1110b which defines the proximal end lOOp of the implant 100, as illustrated in Fig. 2A.

The figures and description herewith depict an implant featuring a neck portion 110, threaded portion 120 with threading 124 and at least two flutes 122. However, the present invention is not limited in its scope to cover an implant having all of these features in a single body and/or embodiment.

Optionally, neck portion 110 may comprise threading 112 along at least a portion of the external surface. Where such threading 112 is present it preferably begins at the apical end of the neck portion 110, directly adjacent to the coronal end of threaded portion 120, and extends either along the entire length of the neck portion 110 or until a point apical of the coronal end of the neck portion 110. The coronal end of the neck portion 110, and hence the body section, is defined by the end of the bone apposition surface. Preferably the threading 112 extends over at least the apical half of neck portion 110. Preferably the threading 112 does not extend over at least the coronal most quarter of the neck portion. Thus, preferably, the threading 112 begins at the apical end of the neck portion and extends over between 50 and 75% of the length of the neck portion.

Optionally and preferably threading 112 may be provided to improve bone retention and osseointegration, for example in the form of micro-threads. Optionally, threading 112 may be configured to have a double lead, with a pitch of about 0.5mm and thread angle of about 25 degrees to about 35 degrees. Optionally threading 112 may be configured according to the configuration of the threaded portion threading 124 and may be configured to facilitate integration within the bone.

Optionally threading 112 may be configured according to at least one or more threading parameters as is known in the art, for example including but not limited to lead, pitch, thread angle, thickness, major diameter, minor diameter, taper angle, thread orientation, end position, start position, porosity, number of stops, number of starts, number of leads, number of cuts, lead in angle, the like or any combination thereof of threading variable and/or parameters.

In some embodiments however neck portion 110 does not comprise any threading 112, in which case the neck portion simply comprises a bone apposition surface which is preferably roughened, preferably by sand blasting and/or acid etching. In some further embodiments neck portion 110 is not present, in which case the threaded body portion 120 including the threading 124 leads directly into smooth section 1110.

FIG. 2A shows smooth section 1110 as described above and is a non-limiting example of a smooth section 1110 that may be provided with implant 100. Smooth section 1110 is generally provided as a soft tissue apposition section in order to provide a beneficial emergence profile. In addition, smooth section 1110 serves as an interfacing platform to facilitate coupling the implant 100 with other dental implant components for example including but not limited to an abutment, a crown, a bridge, a dental prosthesis, an anatomical abutment, an angled abutment, a collar, a ball attachment, a healing cap, platform switching abutment, the like or any combination thereof.

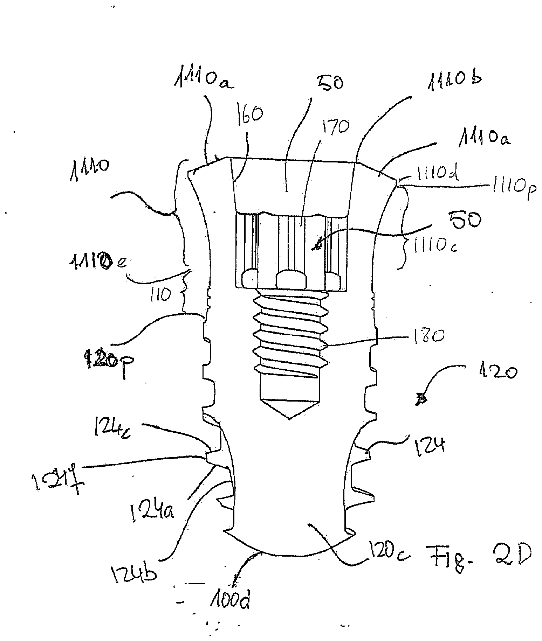

Smooth section 1110 may be provided with an internal interfacing platform 50, for example as shown in FIG. 2D, or an external interfacing platform (not shown). An external interfacing platform may for example include but is not limited to an external hex configuration as is known in the art. An internal interfacing platform may for example include but is not limited to an internal square, hex, octagonal or other polygonal configuration, or combination of radially extending protrusions and/or grooves, as is known in the art. The internal or external interfacing platform 50 provides for coupling the implant with other dental implant structures such as crowns, abutments, transfers or the like. Optionally the interfacing platform 50 may provide a tooling interface provided for maneuvering and/or inserting the implant 100 into the bone.

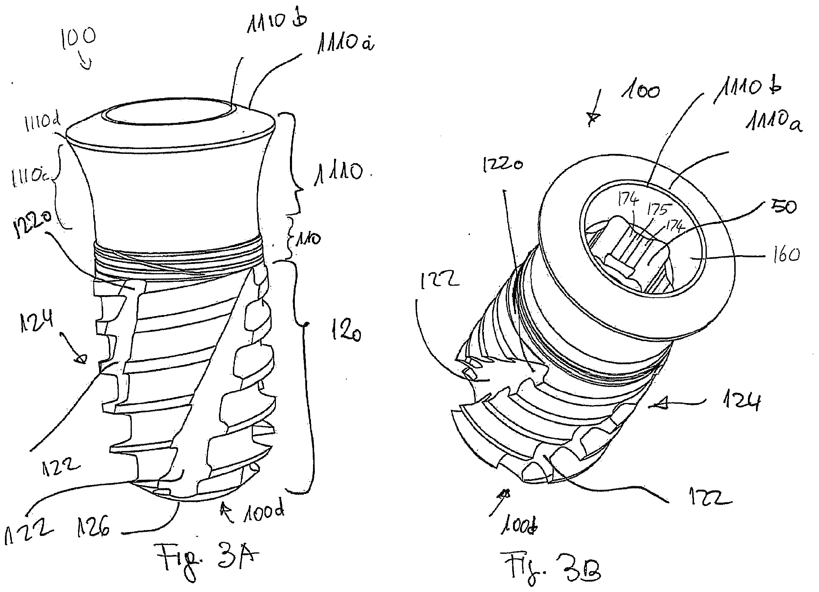

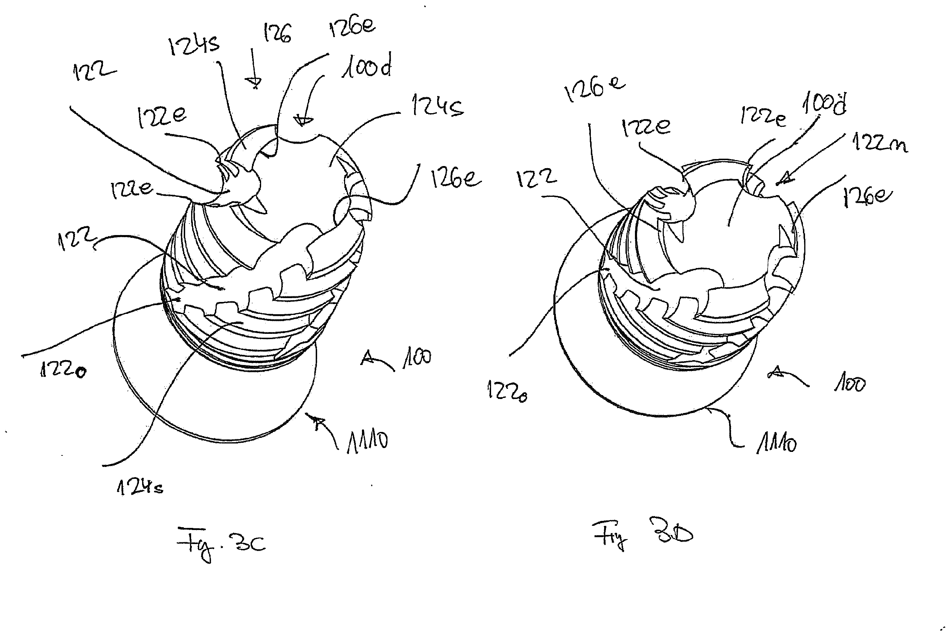

A preferred internal interfacing platform 50, as shown particularly in FIG. 2D and 3B, may comprise a cavity disposed internally within the smooth section 1110 and at least partially within a proximal portion of threaded portion 120. The cavity 50 has an opening at the proximal end lOOp of dental implant 100 and may be configured to be a connecting platform provided for coupling and/or associating with at least one or more dental implant components for example including but not limited to an abutment, a crown, a bridge, abutment screw, fixation screw, a dental prosthesis, an anatomical abutment, an angled abutment, a collar, a ball attachment, a healing cap, the like or any combination thereof.

A preferred configuration of the internal blind bore of the tissue level implant is preferably the same as the configuration of the internal blind bore of the implant described in EP 17 169 130, the teachings of which in this respect being incorporated by reference. In particular, internal blind bore of the tissue level implant preferably includes the "modified torx" connection described in EP 17 169 130 and discussed in more detail below.

With reference to FIG. 2D, the dental implant 100 has an interfacing platform 50 in the form of an internal blind bore. In particular, the blind bore includes a stabilizing section 160 which extends apically from the proximal end lOOp of the dental implant 100, said proximal end in this embodiment being defined by the shoulder 1110b. The blind bore further includes a drive and indexing section 170 which extends apically from the apical end of the stabilizing section 160 and an apical internally threaded section 180 extending apically from the apical end of the drive and indexing section 170.

The stabilizing section 160 is intended to provide for a highly stable connection between the dental implant 100 and the secondary part. At the same time the stabilizing section 160 is intended to provide for good sealing with a complementarily shaped section of the secondary part which is received in the internal blind bore of the dental implant 100. In addition, the stabilizing section 160 provides for a self-locking function with the complementarily shaped section of the secondary part when the secondary part is inserted into the internal blind bore of the dental implant 100.

The stabilizing section 160 is preferably shaped as a truncated cone flaring out in a coronal direction and having a coronal opening with an angle of 5 degrees to 7.9 degrees, more preferably of 5 degrees to 7.7 degrees, even more preferably of 5 degrees to 7 degrees and most preferably 7 degrees with respect to the axis A of the dental implant 100. The above angle range of the stabilizing section 160 in general and the preferred value of 7 degrees in particular provide for a highly stable connection between the dental implant and the secondary part combined with an optimal sealing between the dental implant and the secondary part as well as an optimal self-locking effect of the secondary part in the internal blind bore of the dental implant.

The stabilizing section 160 extends from the flat shoulder 1110b defining the proximal end of the dental implant 100 in an apical direction. The flat shoulder 1110b lies on a plane which is perpendicular to the axis A of the dental implant 100. Nevertheless, according to a variation of the embodiment shown in Fig. 2A the flat shoulder 1110b may have an inclination with respect to the plane which is perpendicular to the axis A of the dental implant 100 so as to match the shape of the secondary part (for instance an abutment) placed over the dental implant 1. The flat shoulder 1110b further extends preferably around the whole blind bore of the dental implant 1 and has a constant width around the same.

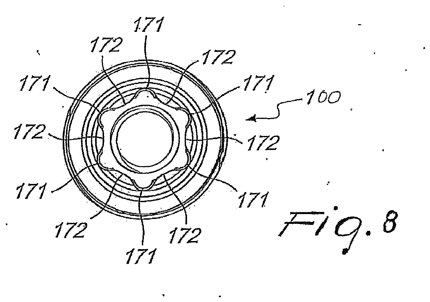

With further reference to FIG. 8, the drive and indexing section 170 is provided with a plurality of connecting lobes 171 having a concave shape extending substantially along the entire axial extension of the drive and indexing section 170. Preferably, the connecting lobes 171 are parts of respective cylinders with a lateral area that is parallel to the axis A of the dental implant 100. Further, preferably, the cylinder parts defining the connecting lobes 171 may be embodied as half-cylinders.

In the particular embodiment shown in FIG. 8 the number of connecting lobes 171 is equal to six, but the person skilled in the art will appreciate that the number of connecting lobes 171 can be varied according to the number of indexing positions of the secondary part on the dental implant and also for providing a sufficient torque coupling to rotate and thus install the dental implant in a jaw bone of a patient and further to also remove the dental implant, if needed. In fact, as will be appreciated by the person skilled in the art a higher number of connecting lobes 171 will allow a more accurate indexing or rotational positioning of a secondary part on the dental implant; nevertheless, the larger the number of connecting lobes 171 the lower the mechanical stability and thus the ability to withstand a higher torque for installing or removing the dental implant. Furthermore, the provision of a larger number of connecting lobes 171 also puts a higher burden on the manufacturing process of the dental implant and inherently on the manufacturing process of the secondary part and/ or of the insertion tool which must be provided with an indexing section that is complementary to the drive and indexing section 170 of the dental implant 100. Clearly, also the stabilizing section 160 of the dental implant 100 must be shaped to be complementary to the corresponding section of the secondary part and/or the insertion tool.

The connecting lobes 171 are interconnected by respective lobe linking areas which are generally designated by reference numeral 172. Each of the lobe linking areas 172 has the same axial extension as the connecting lobes 171. Nevertheless, according to a preferred variation, an apical portion 173 of the lobe linking areas 172 has a step-like configuration.

In the embodiment wherein the number of connecting lobes 171 is equal to six, the number of apical portions 173 of the lobe linking areas 172 (and obviously the number of the lobe linking areas 172) is also equal to six. Clearly, as the lobe linking areas 172 are interposed between the connection lobes 171, their respective numbers will be equal.

Each of the lobe linking areas 172 is shaped generally with a convex shape further including a central section that has a concave shape. Thus, as is apparent for instance in the upper view of FIG. 8, the general outline defined by the connecting lobes 171 and the lobe linking areas 172 is similar to that of a torx screw, however modified due to the particular outline at the lobe linking areas 172. The overall outline of the lobe linking areas 172 and of the connecting lobes 171 is designated in the present description as a "modified torx".

In Fig. 3B the concave section of a lobe linking area 172 is designated with reference numeral 175 while the adjacent two convex sections of a lobe linking area 172 are designated with reference number 174. Generally the lateral areas 174 of the sections of the lobe linking areas 172 are parts of respective cylinders and extend parallel to the axis A of the dental implant 100 in a manner similar to that of the connecting lobes 171.

By means of the shape of the lobe linking area 172, whereby a larger contact surface with a secondary part or an insertion tool is provided, the lobe linking area 172 can achieve a particularly stable mechanical connection with a secondary part (for instance an abutment) and/or an insertion tool, while at the same time the drive and indexing section 170 can withstand a high torque without being damaged during the insertion of the dental implant into the bone of a patient and during the use of the dental implant. Furthermore, the shape of the lobe linking area 172 of the dental implant according to this preferred embodiment of the present invention improves the rotational stability of the connection of the dental implant with the secondary part. In addition, a better sealing between the dental implant and the secondary part is achieved, such sealing avoiding the penetration of non-desirable material or liquid into the cavity defined by the internal blind bore of the dental implant. The mechanical strength and the tightness of the connection between the dental implant and the secondary part are further improved by the combination of the lobe linking area 172 and the connecting lobes 171. The same applies to the torque resistance and the rotational stability of the drive and indexing section 170.

Advantageously, the combined axial extensions of the connecting lobes 171 and the lobe linking areas 172 which form the drive and indexing section 170 are larger than the axial extension of the stabilizing section 160 of the dental implant 100. Preferably the ratio of the axial length of the indexing section 170 to the axial extension of the stabilizing section 160 is from 2/1.8 to 2/1 and more preferably from 2/1.6 to 2/1.2 and most preferably from 2/1.5 to 2/1.3.

An undercut can be provided at the apical end of the drive and indexing section 170. More precisely, where present the undercut can extend apically below the ledges of the apical portion 173 of the lobe linking areas 172 up to a coronal platform of the apical internally threaded section 180 of the internal blind bore of the dental implant 100. At the connecting lobes 171 of the drive and indexing section 170 the undercut has a reduced extension in view of the concave shape, preferably the half-cylinder shape of the connecting lobes 171. The undercut is intended for the connection of a secondary part or an insertion tool by means of a click-in connection.

The apical internally threaded section 180 has internal thread extending in an apical direction. The internal thread is intended, as is well-known in the art, for the threading engagement with a connection or securing screw for retaining in place the secondary part on the dental implant 100.

Advantageously, as the same internal blind bore, including the "modified torx" connection, is present in a preferred embodiment of the present invention as in the implants of EP 17 169 130, the coupling to secondary parts, insertion tools or any other elements is unchanged. Accordingly, the same secondary components (e.g. abutments), insertion tools or other elements can be used for both types of dental implants. In other words, the dental implants according to this preferred embodiment of the present invention and the implants of EP 17 169 130 may advantageously have the same platform for coupling to certain secondary components.

Optionally the cavity may form at least two connecting platforms including at least one internal connecting platform (for instance the above mentioned "modified torx" connection) and at least one surface connecting platform defined for instance at the beveled surface 1110a.

Smooth section 1110 extends distally (apically) toward the distal (apical) end 100d. The proximal end 120p of threaded portion 120 is continuous with the distal end 1110e of smooth section 1110 when the neck portion 110 is missing. Otherwise, the neck portion 110 is interposed between the distal end 1110e of smooth section 1110 and proximal end 120p of threaded portion 120 as shown in the appended figures.

Preferably the overall diameter of implant 100 is defined over its two portions, namely body section (formed of threaded portion 120 and optional neck portion 110) and smooth section 1110. Along the length of flared out section 1110c the implant diameter increases in the coronal direction, with the diameter of the proximal end 1110p of the flared out section being greater than the diameter of the proximal end of the body section and preferably of the maximum diameter of the body section, such that the proximal end of the flared out section 1110c defines the largest diameter of the implant 100.

Over the length of threaded portion 120 the overall implant diameter decreases from proximal end 120p to the apical end 100d. This decrease in diameter may happen continuously, either smoothly or at differing taper angles, or in staggered intervals. In the embodiments in which the end surface 126 of the dental implant 100 is flat, the apical end of the dental implant 100 is coincident with the apical end of the threaded portion 120 and both are designated with reference numeral 100d.

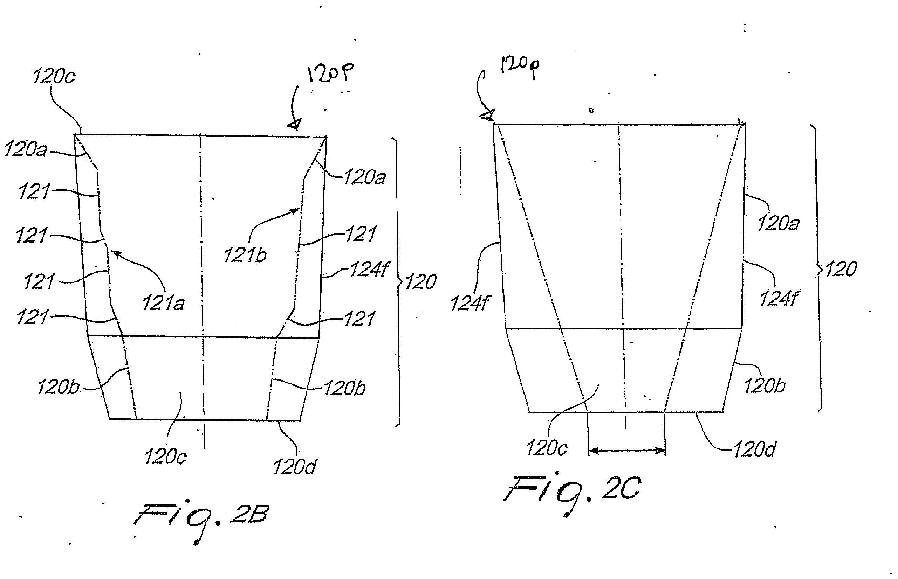

As best seed in FIG. 2B, 2C threaded portion 120 may comprise at least two sub-segments: a proximal sub-segment 120a and a distal sub-segment 120b. Optionally and preferably threaded portion 120, more preferably core 120c, may further comprise a plurality of sub segments 121 of varying dimension and configuration. Optionally each core sub-segment 120a, 120b, 121 may comprise a substantially cylindrical body having a trapezoidal profile each with a distally decreasing diameter such that the proximal diameter is larger than the distal diameter. Optionally core sub-segments 121 may be provided with a circular-cylindrical and/or trapezoidal profile.

Threaded portion 120 comprises a core 120c that spans along the length of threading 124 from proximal end 120p to distal end 120d. Core 120c comprises an overall trapezoidal profile, where the distal end/apical end 120d defining the smallest diameter at the apical end 120d and the largest diameter defined at the proximal end 120p. Most preferably core 120c is substantially flat at the apical end 120d, 126.

As shown in FIG. 2B, 2C, optionally and preferably core 120c may be provided from a plurality of sub-segments 120a, 120b, 121 that may be configured to be cylindrical and/or trapezoidal.

For example as shown in FIG. 2B the core 120c may be configured to have a plurality of sub-segments for example, where profile line 121a shows an optional core profile comprising six sub-segments including proximal sub-segment 120a, distal sub-segment 120b that are intervened with four sub-segments 121. As can be seen sub-segments 121 may be configured to be cylindrical and/or trapezoidal and/or circular cylindrical in any arrangement however the overall core 120c diameter is sequentially apically decreasing.

FIG. 2B shows another optional configuration for core 120c, as shown profile line 121b comprises four core sub-segments including proximal sub-segment 120a, distal sub-segment 120b that are intervened with two sub-segments 121. As can be seen sub-segments 121 may be configured to be cylindrical and/or trapezoidal and/or circular-cylindrical in any arrangement however the overall core 120c diameter is sequentially apically decreasing. Most preferably, core 120c defines the inner diameter of threading 124, while the lateral face 124f of threading 124, extending outwardly form core 120c, defines the outer diameter of threading 124.

FIG. 2C shows another optional configuration for core 120c. As shown the overall core 120c diameter is continuously apically decreasing at a constant taper angle across both sub-segments 120a, 120b. In the apical sub-segment 120b the outer diameter of the threading 124 also decreases in the apical direction, while in sub-segment 120a the outer diameter of the threading diameter remains constant.

As best seen in FIG. 2A, 2D, 3A through 4C core 120c is fit with threading 124 comprising at least one and more preferably two or more threads that extend along the length of threaded portion 120 from distal end 100d to proximal end 120p. Threading 124 comprises a base 124b connecting threading 124 to core 120c. Thread base 124b comprises an apical side 124a, a coronal side 124c, and a lateral edge 124f (defining the thread width) connecting the apical side 124a and the coronal side 124c. Thread base 124b having a thread depth defined between the lateral edge 124f and core 120c. The lateral edge 124f of the threading 124 may be configured to have a variable width that increases along said threaded portion 120 in a coronal direction, configured so that the smallest width of the lateral edge 124f of the threading 124 is adjacent the distal segment 120b and the largest width of the lateral edge of the thread is adjacent the neck portion 110 or, where the neck portion is not present, smooth section 1110.

Threading 124 is provided with variable thread depth that generally increases along the length of threaded portion 120 in an apical direction, so that the smallest depth of the threading is adjacent the neck portion 110 and the largest depth of each thread is adjacent the apical end 120d.

Threading 124 is provided with variable thread depth that is generally increasing along the length of proximal sub-segment 120a in an apical direction, and is generally decreasing along the length of distal sub-segment 120b of the threaded body portion 120 in an apical direction, so that the smallest depth of the thread is adjacent the neck portion 110 and the largest depth of each thread may be found between the distal sub-segment 120b and proximal sub-segment 120a of the threaded portion 120.

Most preferably threading 124 is provided in the form of double thread having at least two starts. Optionally threading 124 may be provided with a single start. Optionally threading 124 may be provided with a plurality of starts.

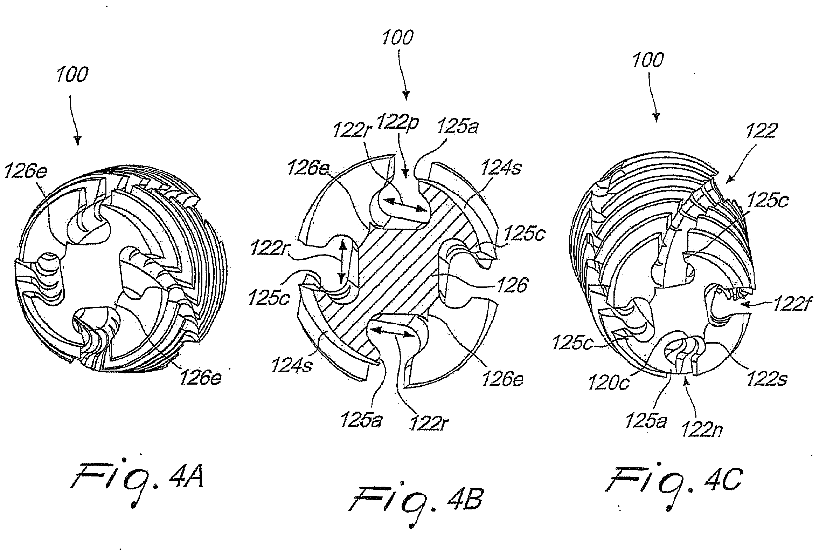

Most preferably the apical end 100d, 126, best seen in FIG. 3C-D, and FIG. 4A-C, features at least two cutting leading edge 126e tips that extends from the core 120c preceding the starting thread of each of threading 124 respectively therein acting as a lead-in to threading 124. Optionally and preferably leading cutting edge 126e may be configured to having a coronal side angle equal to the coronal angle of threading 124 so as to facilitate is start. Optionally and preferably leading edge 126e provides the initial bone drilling element contact therein stabilizing the implant 100.

Preferably threading 124 is provided with a thread angle from about 20 degrees to about 60 degrees. Optionally and preferably threading 124 is provided with a thread angle is provided from about 20 to about 40 degrees. Preferably threading 124 is provided with a thread angel of 35 degrees or 25 degrees.

Optionally threading 124 may be configured to a be a double lead thread having a thread angle of 35 degrees, a pitch of about 2.1 mm.

Optionally threading 124 may be configured to a be a double lead thread having a thread angle of 25 degrees, a pitch of about 1.1 mm to about 1.8 mm.

Optionally thread 124 may be further configured according to at least one or more threading parameters as is known in the art, for example including but not limited to lead, pitch, thread angle, thickness, major diameter, minor diameter, taper angle, thread orientation, end position, start position, porosity, number of stops, number of starts, number of leads, number of cuts, lead in angle, the like or any combination thereof of threading variable and/or parameters.

Implant 100 features at least two or more longitudinal channels 122 forming flutes that span the full length of threaded portion 120 along threading 124. Optionally threading 124 may feature at least two longitudinal flute recessed channels 122. Optionally and preferably may feature four longitudinally recessed channels 122, for example as shown in the figures.

Flutes 122 are preferably configured to mill bone, collect, condense and to disperse house bone when the dental implant 100 is rotated with a dental implant maneuvering tool, for example in the form of a dental hand-piece, both in the clockwise or counterclockwise direction.

Most preferably flute 122 features a proximal opening 122o that is accessible from the neck portion 110. Optionally the proximal opening 122o, FIG. 3A-D, to flutes 122 provides for gaining access to flute 122 from neck portion 110 so as to allow a practitioner to introduce bone, bone grafting material, bone generating medium, bone grafting media, bone growing medicaments and/or enhances into flute 122 therein facilitating the bone growth process and improving osseointegration of implant 100 at the implantation site for example about any portion of the mandible or maxilla. Optionally proximal opening 122o may also provide a window to remove any excess bone compacted within the flute 122.

Optionally and preferably proximal opening 122o further provides for receiving and/or introducing bone in the occlusal most preferably for providing support of the gingiva.

Optionally and preferably flutes 122 form a channel along the length of threaded portion 120 featuring a longitudinal axis selected from the group consisting of linear, curved, arcuate, arched, sigmoidal, spiral the like or any combination thereof. The perspective view of FIG. 3C-D and FIG. 4B show an example of curved longitudinal axis of flute 122 that is curved along the length of threaded portion 120.

Optionally the longitudinal axis of flute 122 may be defined according to the profile of the core portion 120c, for example according to lines 121a, 121b as shown in FIG. 2B.

Optionally implant 100 comprising a plurality of flutes 122, individual flutes and/or group of flutes 122 may be fit with an independent longitudinal axis. For example, an implant comprising four flutes may be configured such that each pair of opposing flutes may have a different longitudinal axis. For example, an implant comprising 3 flutes may be configured such that each flute may have a different longitudinal axis.

Optionally and preferably an implant comprising a plurality of flutes may be configured to have the flutes distributed equally along the circumference of threaded portion 120, therein diving threading 124 into equally spaced thread sub-segments. For example as shown, implant 100 comprising four equally spaced flutes divides threading 124 into four winged members.

Optionally an implant comprising a plurality of flutes may be configured to have the flutes distributed unequally along the circumference of threaded portion 120, therein dividing threading 124 into a plurality of unequally spaced and sized thread sub-segments.

Preferably each flute 122 divides threading 124 into a number of smaller thread sub-segments equal to the number of flutes 122. As shown, implant 100 provided with four flutes 122 forming four winged thread sub-segments 124s.

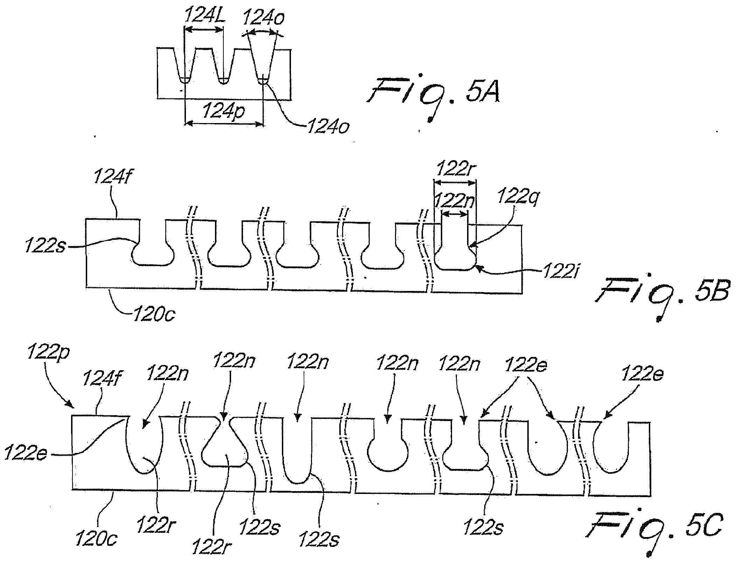

Most preferably flute 122 is configured to have a bottle neck profile across the base and depth of threading 124. Therein flute 122 is formed between core 120c and threading lateral edge 124f. Preferably the bottleneck profile assumes an ovoid flask shape, for example as shown FIG. 5B-C.

Preferably the bottleneck profile 122p may be formed from two sigmoid curved shoulders 122s and a neck portion 122n, the shoulders 122s extending anteriorly from core 120c toward thread lateral edge 124f therein forming an ovoid shape recess 122r along the base to and forming a neck 122n across lateral surface 124f. Most preferably the long axis of ovoid recess 122r is defined along core 120c and the short axis is formed across the base of threading 124 between core 120c and lateral face 124f.

Most preferably the bottleneck shaped recess flute 122 formed along threading 124 forms a plurality of thread sub-segments 124s, best seen in FIG. 4C, therein each sub-segment 124s forms a wing-shaped thread having two beveled edges 122e along the thread lateral face 124f defined by the neck portion 122n of flute 122. Most preferably this significantly increases the number of cutting edges provided along implant 100.

Most preferably flute 122 forms a plurality of sub-segments 124s and/or blades and/or wings, along threading 124, as seen in FIG. 4C, provides for significantly increasing the surface area of implant 100 therein facilitating osseointegration and ensuring a 360 degrees of implant support.

Apical end surface 126 optionally and preferably facilitates sinus lifting while maintaining the Schneiderian membrane by virtue of apical surface 126 being flat and/or apical to that the thread sub-segments 124s therefore apical end surface 126 may serve as a protective barrier of the Schneiderian membrane from threads sub-segments 124s. Accordingly sinus lifting procedure may be facilitated by implant 100 in that bone may be directed apically, by rotation in both the clockwise and/or counterclockwise direction, allowing for bone growth while apical end surface 126 further facilitates maintaining the integrity of the Schneiderian membrane.

Most preferably flute 122 is configured such that the length of shoulder 122s is gradually decreasing in a proximal direction along the length of implant 100, such that shoulders 122s are longest at the proximal end 100d and shortest at adjacent to neck portion 110.

Optionally shoulder 122s is a sigmoid configured to have an inner radius 122i of about 0.4 mm and an external radius 122q of about 0.3 mm; wherein the inner radius 122i defines the ovoid recess 122r and the external radius defines the neck 122n, as best seen in FIG. 5B-C.

Optionally the ovoid recess 122r at its widest part has a distance of about 1.6 mm while the neck 122n at its widest has a distance of about 1.0 mm, as best seen in FIG. 5B.

Optionally flute 122 may be configured to have pitch of 35 mm along the length of implant 100. Optionally flute 122 may be configured to have a thread number of four. Optionally flute 122 may be configured to have a thread number equal to the number of flutes 122. Optionally flute 122 may be configured according to and/or as a function of at least one or more parameter defining threading 124.

Optionally flute 122 may be configured to have the threading profile according to at least one or more threading parameters for example including but not limited to lead, pitch, thread angle, thickness, major diameter, minor diameter, taper angle, thread orientation, end position, start position, porosity, number of stops, number of starts, number of leads, number of cuts, lead in angle, the like or any combination thereof of threading variable and/or parameters

Most preferably the threading 124 and flute 122 are configured so as to provide a cutting surface and collect bone when implant 100 is rotated both clockwise or counterclockwise.

FIG. 5C shows optional configuration and profiles for flute 122 according to the present invention. FIG. 5C shows optional configuration of flute 122 wherein the profile 122p may be configured according to the size of the neck 122n, and the size of the ovoid recess 122r, for example a shown.

FIG. 2B and 2C show optional profiles of threaded portion 120, showing optional configurations of the inner core 120c. As shown in lines 121a, 121b showing that core 120c may be configured according to a plurality of sub-segments 120a, 120b, 121 in optional combinations of cylindrical and/or trapezoidal and/or circular-cylindrical sub-segments.

FIG.2D shows a cross section of implant 100 therein revealing threading 124 configuration and the core configuration 120c.

FIG. 3A-D show perspective views revealing an optional internal interface cavity 50 that facilitates attachment to optional dental implant components, as previously described, for example including but not limited to an abutment, a crown, a bridge, abutment screw, fixation screw, a dental prosthesis, an anatomical abutment, an angled abutment, a collar, a ball attachment, a healing cap, the like or any combination thereof.

The perspective view provided by FIG. 3B further shows the coronal access to flute 122 via opening 122o.

FIG. 3C-D and FIG. 4A-C show an apical perspective view revealing apical end 126 including a cutting leading edge 126e and the onset of the double lead thread 124, as previously described.

FIG. 4C shows the formation of a plurality of thread sub-segments 124s and or wing and/or blade that is equal to the number of flutes 122.

Apical end surface 126 is substantially flat and including at least one cutting leading edge tip 126e extending from the core 120c preceding the start of each of thread 124. Optionally and preferably the cutting leading edge tip 126e preferably provides for stabilizing said implant within a bone, and to allow for bone to grow around the implant 100. Accordingly tips 126e may be utilized to implant 100 within a 1 mm of bone and introducing bone grafting and/or generating medium around the surface of implant.

Preferably the apical end surface 126, 100d further comprises a first thread sub-segment 124s (wing, blade) having two opposing lateral beveled ends 122e along the lateral surface including a first (apical) wing end 125a and a second (coronal) wing end 125c. Optionally and preferably second (coronal) wing end 125c may further comprise an apical face 124a undercut therein elevating second (coronal) wing end 125c relative to said first (apical) wing end 125a, provided to facilitate drilling.

FIG. 4C further reveals the profile of flute 122 as a bottle neck formation 122p formed by two shoulders 122s forming a neck portion 122n and a recess 122r provided for collection and receiving bone as the drill is rotated in either clockwise or counterclockwise directions. Optionally and preferably the shape and/or profile 122p of flute recess 122r may be determined by controlling the size ratio of neck size 122n and recess 122r.

FIG. 5A shows an optional configuration of threading 124 show the thread pitch 124p, thread lead 124L shown as two leads, and thread angle 124o. FIG. 5A depicts and optional thread configuration where the number of thread leads 124L is two, the thread angle 124o equal to about 35 degrees and the thread pitch 124p of about 2.1 mm. Further optional thread parameter may for example be thread lead 124L of two, thread angle 124o equal to about 25 degrees, and thread pitch 124p of about 1.8 mm.

FIG. 5B shows an optional configuration of flute 122 showing the flute bottle neck profile 122p that is formed between two shoulders 122s having an internal radius 122i and an outer radius 122q to form a recess 122r and neck 122n.

FIG. 5C shows optional configurations and profiles for flute 122 according to the present invention having an ovoid base 122r and a neck portion 122n that may be configured relative to one another and form an edge 122e. The neck 122n preferably defines flute edge 122e on either side of the neck 122n. Optionally flute edge 122e may be configured to be symmetric or asymmetric about the neck 122n therein forming different configurations of flute edge 122e on either side of neck 122n for example as shown in FIG.5C.

Optionally the flute 122 may assume different profiles, for example as shown in FIG. 5C, along its length. Optionally each flute 122 disposed with implant 100 may assume a different flute profile along its length.

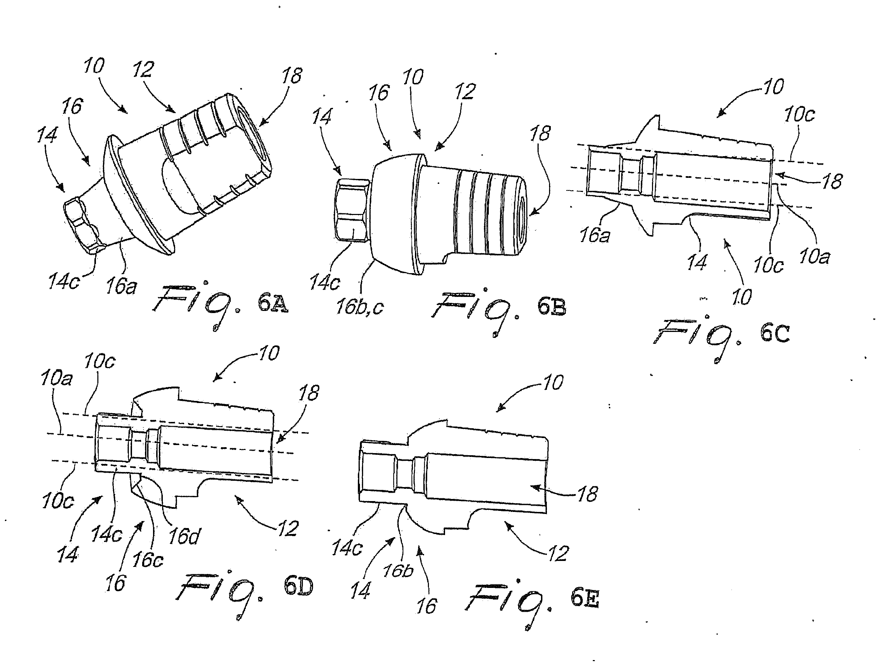

Now referring to FIG. 6A-E showing optional embodiments for an abutment 10 in accordance with optional embodiments of the present invention, the abutment 10 is configured to associated and/or otherwise couple with the implant 100.

FIG. 6A-B show perspective view of optional abutments 10 according to an optional embodiment of the present invention.

FIG. 6C-E show a cross sectional views of the abutment depicted in FIG. 6A-B of optional configurations of abutment 10 showing the optional connection platforms utilized to associate and/or couple with an implant according to the present invention.

Abutment 10 provides for coupling with an implant according to the present invention and therefore facilitates proper prosthetic location and emergance profile based on the implantation site and the mesio-distal plane, and/or the buccal-palatal plane, and/or the buccal-lingual plane.

Preferably abutment 10 comprises a mediating portion 16 that extends coronally of the implant and assists in creating a natural emergence profile in the soft tissue.

Abutment 10 has a proximal end 12 and a distal end 14 and medial portion 16 disposed therebetween. Abutment 10 comprises a substantially cylindrical core spanning proximal 12 end and a distal end 14, shown in dotted lines 10c (FIG. 6D, 6C) and defining a central axis 10a (FIG.6C-D) and an external surface that is contoured along the length of abutment 10 between distal end 14 and proximal end 12 to define the shape and configuration of abutment 10. Optionally and preferably each portion of abutment 10, namely distal 14, medial 16, proximal 12, may be surfaced to provide optional forms and functionality, as is known in the art.

Optionally medial portion 16 may provide for platform switching, for example as shown where a wider base is provided along proximal portion 12 to facilitate a wide coupling base for a crown (not shown) coupled onto proximal portion 12.

Most preferably proximal portion 12 may be provided in optional forms for coupling to an overdenture abutment, bridge, denture, crown or the like restorative structure or prosthetic members. Optionally proximal portion 12 may be provided in optional attachment platforms and forms as is known in the art for example including but not limited to ball attachment, overdenture attachment, casting, UCLA, threaded, gold, snaps, angled, straight, angled, internal cap attachment, the like or any combination thereof.

Abutment 10 further comprises an anti-rotation portion 14c disposed along distal end 14. Preferably anti-rotation portion 14c is configured to couple with the implant and is provided to facilitate anti-rotational coupling with drive and indexing section 170. Optionally and preferably anti-rotation portion 14c comprises a coupling platform to mirror and couple with drive and indexing section 170 such they fit in a one to one and/or male-female relationship.

Anti-rotation portion 14c is shown in a non-limiting optional external hex configuration for attachment to a dental implant having a corresponding internal hex configuration. However, it may be realized in a plurality of optional configurations. Optionally anti-rotation portion 14c may be provided as an internal configuration, external configuration, or a combination thereof as is known in the art. Optionally abutment 10 may be provided in optional anti-rotation forms for example including but not limited to at least one or more selected from the group consisting of internal six receptor sockets, scalloped, internal dodecagon, external dodecagon, internal hex internal, external hex, external octagon, internal octagon, external spline, internal spline, Morse taper, internal Morse taper, one piece, internal six lobe, external six lobe, internal tri lobe, external tri-lobe, internal six spline, external six- spline, internal thread, internal pentagon, external pentagon, external thread, internal square, external square, internal five lobe, internal four lobe, internal three spline, external triangle, internal eight spline, external six lobe, internal eight lobe, internal tube to tube plug in, triangular, polygonal of n sides where n>=3 or more, the like as is known in the art or any combination thereof. Most preferably, anti-rotation section 14c has a configuration complementary to the drive and indexing section 170 of implant 100, as shown in Fig. 8.

Abutment 10 comprises a central bore 18 extending through at least a portion from proximal end 12 to distal end 14. Optionally and preferably central bore 18 is provided for receiving a fixation screw and/or an abutment screw 20. Optionally and preferably abutment screw 20 provides for coupling abutment 10 to implant 100.

Abutment 10 comprises a mediating portion 16 defined between proximal end 12 and distal end 14. Preferably mediating portion 16 defines the abutment's emerging profile as it emerges from implant 100 toward an implant crown (not shown).

As shown in FIG. 6C, mediating portion 16 comprises an abutment surface 16a provided for coupling and/or interfacing with internal stabilizing section 160. Optionally and preferably abutment surface 16a is a sloping surface gradually sloping from distal end 14 toward proximal end 12.

Alternatively, as shown in FIG. 6D, mediating portion 16 comprises abutment surfaces 16c and 16d provided for coupling and/or interfacing with beveled part 1110a and flat shoulder 1110b of smooth section 1110 respectively.

Optionally the length and/or dimensions of surface 16a, 16b, 16c and 16d are configurable and may be adjusted relative to the size and dimensions of implant 100.

For example as shown in FIG. 6E shows mediating portion 16 comprising an abutment surface 16b provided for coupling and/or interfacing with shoulder 1110b. Optionally and preferably abutment surface 16b is a substantially flat non-sloping surface that is substantially perpendicular (about 90 degrees) relative to the central axis of abutment 10 wherein surface 16b extends from the abutment core defined by distal portion 14 at the border defined between mediating portion 16. Most preferably the contour and/or angle of surface 16b may be defined and/or configured according to the surface connection platform of implant 100.

With reference to FIG. 1B and FIG. 7A-H the thread and/or threading 124 can be configured to have at least one or more contour modification 140 relative to the horizontal axis 30a of the implant thread. The contour modifications may be disposed on at least one of the apical side 32 or coronal side 34 of the thread, relative to the thread's horizontal axis. The modifications 140 may be provided as a result of angulation that are defined along the horizontal axis 30a.

FIG. 7B-H show schematic illustrative diagrams of exemplary dental implant threading 6, 124 according to optional embodiments of the present invention. FIG. 7B shows an optional thread profile along the horizontal plane 30a.

As previously described with respect to FIG. 1B, threading 6 includes an apical side 32, a coronal side 34, and a lateral edge 36 connecting the apical side and the coronal side, a base 30b connecting the thread to the core, a thread depth 30d defined between the lateral edge and the base. The thread depth 30d is defining along the medial-lateral axis (M-L) of the horizontal plane 30a of the thread; the adjacent threads defined between adjacent thread base 30b are connected over the external surface of an implant core 4 defining an inter-thread face 38. These teachings are applicable to the threading 124 described in the other figures of this application.

The thread apical side 32 or thread coronal side 34 may be fit with at least one contour modification 140 along at least one axis of the horizontal plane 30a, including the medial-lateral axis M-L axis as shown in FIG. 7A and/or the anterior- posterior axis A-P axis. Preferably contouring along at least one axis of the horizontal plane defines at least two sub-segments 142, 144 along the horizontal plane 30a, for example as shown in FIG. 7B-H.

As shown in FIG. 7A the contour modification may be realized along the M-L axis for example as shown in thread contour 140m, or along the A-P axis as shown in thread contour 140a.

Optionally the thread may comprise at least one or more horizontal contour modifications 140. Optionally there may be up to about five contour modifications 140 along the horizontal axis on either the apical side 32 or the coronal side 34 and along at least one axis of the horizontal plane.

Optionally each contour modification may 140 assume a variable angle of up to about 180 degrees along each of the apical side 32 or coronal side 34.

Optionally the modification 140 may form a substantially symmetric thread surface along the thread, for example as shown in FIG. 7B and 7G. Optionally the thread surface may be configured to be substantially asymmetric for example as shown in FIG. 7C-F.

Optionally the horizontal plane modification 140 may be applied along at least one of apical side 32 or coronal side 34 and may be curved (FIG. 7E-F) and/or linear (FIG. 7B-C) or it may comprise a combination thereof for example as shown in FIG. 7G.

Optionally each additional contour modification 140 introduced along at least one axis of the horizontal plane increases the number individual sub-segment defined along the horizontal plane by at least one sub-segment 142, 144.

Optionally at least one of the thread apical side 32 or the thread coronal side 34 may be individually fit with at least one and up to five contour modifications 140 along either the medial-lateral axis forming a modification 140m or along the anterior posterior axis 140a.

Optionally the implant 100 may be configured to include at least two threading 124, wherein each may be individually configured to include at least one or more horizontal plane modification 140.

Optionally each of the plurality of threading 124 may be collectively and/or individually/independently configured along its horizontal plane 30a to include the at least one horizontal plane thread modification 140 in either the M-L axis or the A-P axis and along at least one of the thread apical side 32, thread coronal side 34, and/or thread lateral edge 36.

Optionally the contour modification 140 may define an angle of up to about 180 degrees relative to the horizontal plane 30a.

Optionally the threading 124 may be configured to be symmetric about at least one axis of the horizontal plane 30a.

Optionally the threading 124 may be configured to be asymmetric about at least one axis of the horizontal plane 30a.

Optionally at least one of: the thread apical side 32 or the thread coronal side 34 or the lateral edge 36, may feature at least one recessed grooves 150, for example as shown in FIG. 7G. Optionally threading 124 may be fit with a plurality of recessed grooves 150, for example as shown in FIG. 7G.

Optionally the recessed grooves 150 may assume any shape.

Optionally at least one dimension of the recessed grooves (150) is configured to be from about 0.01 mm up to about 0.7 mm.

Optionally the depth of thread 124 may be configured to be from about 0.1 mm up to about 2 mm.

Optionally the inter-thread face 38 may be configured to assume any shape or angle.

Optionally the inter-thread face 38 may for example include but is not limited to: contoured, curved, angled, linear, the like, or any combination thereof.

Optionally the inter-thread face 38 may be substantially linear having an angle of up to about 60 degrees.

Optionally the inter-thread face 38 may comprise a length of up to about 2 mm.

Optionally at least one surface selected from: the thread apical side 32, the thread coronal side 34, the lateral edge 36, the inter-thread face 38, further comprise at least one outwardly extending extension 152, for example as shown in FIG. 7G. Optionally the threading 124 may comprise a plurality of the outwardly extending extension (152).

As shown in FIG. 7A the contour modification may be realized along at least one axis of the horizontal plane in at least one of M-L axis for example as shown in thread contour 140m, or along the A-P axis as shown in thread contour 140a.

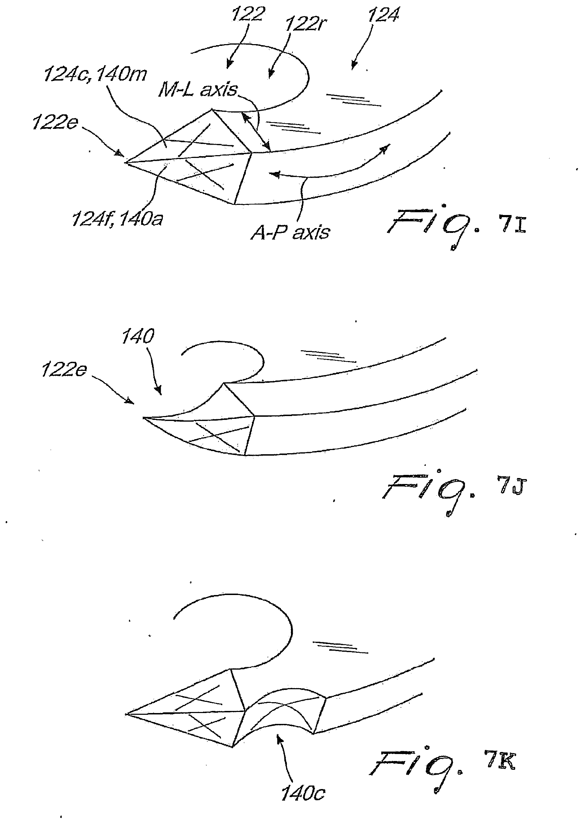

FIG. 7I shows a horizontal plane contour modification 140a, 140m that is applied onto thread 124 forming an edge 122e that is pointed, for example as shown, provided for cutting, compacting and directing bone into flute 122. Edge 122e is formed with two contour modifications 140a, 140m along the horizontal plane along the M-L axis and the A-P axis respectively, for example as shown. A first contour modification 140a is configured along the horizontal face 124f and a second contour modification 140m is configured along the coronal surface 124c.

FIG. 7J shows a threading 124 similar to that shown in FIG. 7I where the thread coronal surface 124c is adjusted to introduce an undercut 140c to horizontal plane contour modification that is applied onto the M-L Axis.

FIG. 7K shows an optional threading 124 where a horizontal plane contour adjustment is effected along the A-P axis along the thread edge 124f wherein an undercut 140c is introduced along the thread face, for example as shown.

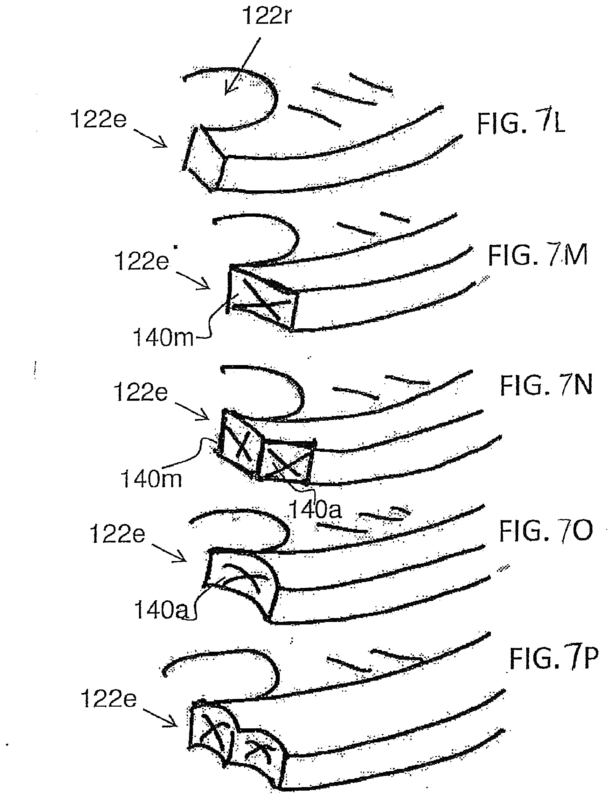

FIG. 7L-P show optional horizontal plane thread modifications as previously described.

FIG. 7L shows an optional threading 124 having a flute edge 122e.

FIG. 7M shows a similar threading 124 where edge 122e, shown in FIG. 7L however further comprising a horizontal modification 140m to form a more pronounced angle at edge 122e, wherein edge 122e forms an acute angle with respect to flute recess 122r.

FIG. 7N shows a similar threading 124 where edge 122e, as shown in FIG. 7L- M however further comprising a second horizontal modification in the form of modification 140a along edge 124f along the A-P axis. Optionally threading 124 may comprise a plurality of such contour modifications.

FIG. 7O shows a similar threading 124 where edge 122e, shown in FIG. 7M however further comprising a horizontal modification along the M-L axis in the form of a curved undercut 140c producing a curved edge 122e. Optionally such a curvature 140c may be provided for increased osseointegration.

FIG. 7P shows threading 124 having a further horizontal surface modification wherein edge 124f is provided with a dual curved surface therein forming a multipoint edge 122e.

The above described embodiments are for illustrative purposes only and the skilled person will realize that alternative arrangements are possible which fall within the scope of the claims. For example, the shoulder 1110b and bevelled part 1110a may both or individually be removed from the smooth section 1110. The drive and indexing means 170 can be any known shape in the prior art. The neck portion 110 may be entirely threaded or entirely smooth or omitted from the implant altogether.

## Claims

1. A tissue level implant (100) comprising a smooth section (1110) and a body section (110, 120) that are continuous with one another, the smooth section (1110) defining the proximal end of the implant (100) and the body section (110, 120) defining the distal end of the implant (100), the body section (110, 120) being devised as a bone tissue apposition surface;
a) said body section (110, 120) comprising a threaded portion (120) having an inner core (120c) fit with threading (124) extending therefrom along its length; said core (120c) defining an internal diameter of said threaded portion (120) and said threading (124) defining the external diameter of said threaded portion (120);
b) wherein said core (120c) is continuous along the length of said threaded portion (120) and has a decreasing diameter such that the proximal diameter of said core (120c) is larger than the distal diameter of said core (120c); the core (120c) being substantially flat at an apical end (100d) of the dental implant (100);
wherein the threading (124) of said core (120c) includes at least one thread (124) extending therefrom along the length of said threaded portion (120), wherein each thread (124) comprises an apical side (124a), a coronal side (124c), and a lateral edge (124f) connecting the apical side (124a) and the coronal side (124c), a base (124b) connecting the thread (124) to the core (120c), a thread depth defined between the lateral edge (124f) and the base (124b), and wherein said at least one thread (124) has a variable depth that increases along the length of at least a segment (120a, 120b) of said threaded portion (120) in an apical direction, so that the smallest depth of the thread (124) is adjacent the proximal end of said segment of the threaded portion (120) and the largest depth of each thread (124) is adjacent the apical end of said segment of the threaded portion (120), **characterized in that** the smooth section (1110) comprises a flared out section (1110c) widening in the coronal direction such that the coronal end of the flared out section has a greater radius than the coronal end of the body section, and **in that** the smooth section (1110) is devised as a soft tissue apposition surface.

2. The tissue level implant of claim 1, wherein said at least one thread (124) has a variable depth that increases along the full length of said threaded body portion (120) in an apical direction, so that the smallest depth of the thread (124) is adjacent the proximal end (120p) of the threaded portion (120) and the largest depth of each thread (124) is adjacent the apical end (100d) of the threaded portion (120).

3. The tissue level implant of claim 1 or 2, wherein the apical end (100d) comprises at least one cutting leading edge tip (126e) extending from the core (120c) preceding the start of each of said thread (124) wherein said cutting leading edge tip (126e) provided for stabilizing said implant within a bone.

4. The tissue level implant of claim 1, 2 or 3 wherein the threading (124) has a variable width that increases along said threaded portion (120) in a coronal direction so that the smallest width of the lateral edge (124f) of the thread is adjacent the apical end (100d) of the dental implant (100) and the largest width of the lateral edge of the threading is adjacent the proximal end (120p) of threaded portion (120).

5. The tissue level implant of any of claims 1 to 4 wherein the at least one thread (124) comprises on both its apical side (124a) and coronal side (124c) at least one contour modification (140) along the thread horizontal axis (30a) therein defining at least two subsegments (142, 144) along the horizontal axis.

6. The tissue level implant of one or more of the preceding claims wherein said threading (124) further comprises at least two longitudinal recesses along the length of said threaded portion (120) therein defining at least two flutes (122) defined along the full length of said threaded portion (120); said flutes (122) configured to collect bone when the dental implant (100) is rotated and to have a proximal opening (122o) adjacent to said proximal end (120p) of said threaded portion (120); and wherein said at least two flutes (120) are formed across the depth of said threading (124) between the thread base (124b) and the thread lateral edge (124f), said flutes (122) having a profile forming an ovoid recess (122r) along said thread base (124b) and a neck (122n) formed along said thread lateral edge (124f).

7. The tissue level implant of one or more of the preceding claims wherein the smooth section (1110) comprises a flared out section (1110c) having a tulip-like shape followed by a circular cylindrical section (1110d) followed by a beveled part (1110a) having a truncated cone outline followed by a flat shoulder (1110b) which defines the proximal end (lOOp) of the dental implant (100).

8. The tissue level implant of one or more of the preceding claims wherein the smooth section (1110) is machined to have a polished surface and the body section (110, 120) is sandblasted and/or acid etched.

9. The tissue level implant of one or more of the preceding claims wherein the implant (100) includes:
an internal blind bore for connection to a secondary part, the internal blind bore extending in an axial direction of the implant and including: a stabilizing section (160) which extends apically from the coronal end of the dental implant and a drive and indexing section (170) which extends apically from an apical end of the stabilizing section (160),
wherein the drive and indexing section (170) is provided with a plurality of connecting lobes (171) having a concave shape and extending in the longitudinal direction, the connecting lobes (171) being interconnected by respective lobe linking areas (172) also extending in the longitudinal direction, each of the lobe linking areas (172) including: two convex sections (174) extending in the longitudinal direction and adjacent to a respective connecting lobe (171); and a concave section (175) extending in the longitudinal direction between the two convex sections (174).

10. The tissue level implant of one or more preceding claims, wherein the body section (110, 120) further comprises a neck portion (110) directly adjacent to the proximal end (120p) of the threaded portion (120) and the apical end of the smooth section (1110).

11. The tissue level implant as claimed in claim 10, wherein the neck portion (110) has an outer diameter equal to or less than the external diameter (4e) of the threaded portion (120).

12. The tissue level implant of claim 10 or 11, wherein the neck portion (110) comprises threading (112) along at least a part of its length in the form of micro-threads to improve bone retention and osseointegration.

## Patentansprüche

1. Ein Implantat (100) auf Gewebeebene, dass einen glatten Abschnitt (1110) und einen Körperabschnitt (110, 120) umfasst, die miteinander durchgängig sind, wobei der glatte Abschnitt (1110) das proximale Ende des Implantats (100) bestimmt und der Körperabschnitt (110, 120) das distale Ende des Implantats (100) bestimmt, wobei der Körperabschnitt (110, 120) als Knochengewebeauflagefläche konstruiert ist;
a) wobei der Körperabschnitt (110, 120) einen Gewindeabschnitt (120) umfasst, der einen inneren Kern (120c) hat, welcher mit einem Gewinde (124) versehen ist, dass sich davon entlang seiner Länge erstreckt, wobei der Kern (120c) einen Innendurchmesser des Gewindeabschnitts (120) bestimmt und dass Gewinde (124) den Außendurchmesser des Gewindeabschnitts (120) bestimmt;
b) wobei der Kern (120c) über die Länge des Gewindeabschnitts (120) durchgängig ist und einen abnehmenden Durchmesser hat, so dass der proximale Durchmesser des Kerns (120c) größer ist als der distale Durchmesser des Kerns (120c), wobei der Kern (120c) an einem apikalem Ende (100d) des Zahnimplantats (100) im Wesentlichen flach ist;
wobei das Gewinde (124) des Kerns (120c) mindestens ein Gewinde (124) einschließt, dass sich davon über die Länge des Gewindeabschnitts (120) erstreckt, wobei jedes Gewinde (124) eine apikale Seite (124a), eine koronale Seite (124c) und eine Seitenkante (124f) umfasst, welche die apikale Seite (124a) und die koronale Seite (124c) verbindet, eine Basis (124b), die das Gewinde (124) mit dem Kern (120c) verbindet, eine Gewindetiefe die zwischen der Seitenkante (124f) und der Basis (124b) bestimmt ist, wobei das mindestens eine Gewinde (124) eine variable Tiefe hat, die über die Länge mindestens eines Segments (120a, 120b) des Gewindeabschnitts (120) in eine apikale Richtung zunimmt, so dass die geringste Tiefe des Gewindes (124) an das proximale Ende des Segments des Gewindeabschnitts (120) angrenzt und die größte Tiefe jedes Gewindes (124) an das apikale Ende des Segments des Gewindeabschnitts (120) angrenzt, **dadurch gekennzeichnet, dass** der glatte Abschnitt (1110) einen aufgeweiteten Abschnitt (1110c) umfasst, der sich in die koronale Richtung aufweitet, so dass das koronale Ende des aufgeweiteten Abschnitts einen größeren Radius hat als das koronale Ende des Körperabschnitts und dadurch, dass der glatte Abschnitt (1110) als Weichgewebeauflagefläche konstruiert ist.

2. Das Implantat auf Gewebeebene gemäß Anspruch 1, wobei das mindestens eine Gewinde (124) eine variable Tiefe hat, die über die Gesamtlänge des Gewindekörperabschnitts (120) in eine apikale Richtung zunimmt, so dass die geringste Tiefe des Gewindes (124) an das proximale Ende (120p) des Gewindeabschnitts (120) angrenzt und die größte Tiefe jedes Gewindes (124) an das apikale Ende (100d) des Gewindeabschnitts (120) angrenzt.

3. Das Implantat auf Gewebeebene gemäß Anspruch 1 oder 2, wobei das apikale Ende (100d) mindestens eine Schneidvorderkantenspitze (126e) umfasst, die sich vor Beginn jedes der Gewinde (124) vom Kern (120c) erstreckt, wobei die Schneidvorderkantenspitze (126e) für die Stabilisierung des Implantats in einem Knochen sorgt.

4. Das Implantat auf Gewebeebene gemäß Anspruch 1, 2 oder 3, wobei das Gewinde (124) eine variable Breite hat, die entlang dem Gewindeabschnitt (120) in eine koronale Richtung zunimmt, so dass die geringste Breite der Seitenkante (124f) des Gewindes an das apikale Ende (100d) des Zahnimplantats (100) angrenzt und die größte Breite der Seitenkante des Gewindes an das proximale Ende (120p) des Gewindeabschnitts (120) angrenzt.

5. Das Implantat auf Gewebeebene gemäß einem beliebigen der Anspruch 1 bis 4, wobei das mindestens eine Gewinde (124) sowohl auf seiner apikalen Seite (124a) als auch auf seiner koronalen Seite (124c), mindestens eine Kontur Modifikation (140) entlang der horizontalen Gewindeachse (30a) umfasst und darin, entlang der horizontalen Achse mindestens zwei Teilsegmente (142, 144) bestimmt.

6. Das Implantat auf Gewebeebene gemäß einem oder mehreren der obigen Ansprüche, wobei das Gewinde (124) weiter mindestens zwei Längsvertiefungen über die Länge des Gewindeabschnitts (120) umfasst und darin mindestens zwei Rinnen (122) bestimmt, die über die Gesamtlänge des Gewindeabschnitts (120) bestimmt sind, wobei die Rinnen (122) ausgebildet sind, um Knochen zu sammeln, wenn das Zahnimplantat (100) gedreht wird und um eine proximale Öffnung (122o) angrenzend an das proximale Ende (120p) des Gewindeabschnitts (120) zu haben und wobei die mindestens zwei Rinnen (120) über die Tiefe des Gewindes (124) hinweg zwischen der Gewindebasis (124b) und der Gewindeseitenkante (124f) geformt sind, wobei die Rinnen (122) ein Profil haben, das eine eiförmige Vertiefung (122r) über die Gewindebasis (124b) und einen Hals (122n) formt, der entlang der Gewindeseitenkante (124f) geformt ist.

7. Das Implantat auf Gewebeebene gemäß einem oder mehreren der obigen Ansprüche, wobei der glatte Abschnitt (1110) einen aufgeweiteten Abschnitt (1110c) umfasst, der eine tulpenartige Form hat, gefolgt von einem kreiszylindrischen Abschnitt (1110d) gefolgt von einem abgeschrägten Teil (1110a) mit kegelstumpfförmigem Umriss, gefolgt von einer flachen Schulter (1110b), die das proximale Ende (100p) des Zahnimplantats (100) bestimmt.

8. Das Implantat auf Gewebeebene gemäß einem oder mehreren der obigen Ansprüche, wobei der glatte Abschnitt (1110) maschinell bearbeitet ist, um eine geglättete Oberfläche zu haben und der Körperabschnitt (110, 120) mit Sandstrahltechnik bearbeitet und/oder säuregeätzt ist.

9. Das Implantat auf Gewebeebene gemäß einem oder mehreren der obigen Ansprüche, wobei das Implantat (100) folgendes einschließt:
eine interne Blindbohrung zur Verbindung mit einem sekundären Teil, wobei die interne Blindbohrung sich in eine axiale Richtung des Implantats erstreckt und Folgendes einschließt: einen Stabilisierungsabschnitt (160), der sich apikal vom koronalen Ende des Zahnimplantats erstreckt und einen Treib- und Indizierungsabschnitt (170), der sich apikal von einem apikalen Ende des stabilisierenden Abschnitts (160) erstreckt,
wobei der Treib- und Indizierungsabschnitt (170) mit einer Vielzahl von Verbindungsvorsprüngen (171) versehen ist, die eine konkave Form haben und sich in die Längsrichtung erstrecken, wobei die Verbindungsvorsprünge (171) miteinander durch entsprechende Vorsprungsverbindungsbereiche (172) verbunden sind, die sich ebenfalls in die Längsrichtung erstrecken, wobei jeder der Vorsprungsverbindungsbereiche (172) Folgendes einschließt: zwei konvexe Abschnitte (174), die sich in die Längsrichtung erstrecken und an einen entsprechenden Verbindungsvorsprung (171) angrenzen und einen konkaven Abschnitt (175), der sich in die Längsrichtung zwischen den zwei konvexen Abschnitten (174) erstreckt.

10. Das Implantat auf Gewebeebene gemäß einem oder mehreren der obigen Ansprüche, wobei der Körperabschnitt (110, 120) weiter einen Halsabschnitt (110) direkt angrenzend an das proximale Ende (120p) des Gewindeabschnitts (120) und das apikale Ende des glatten Abschnitts (1110) umfasst.

11. Das Implantat auf Gewebeebene gemäß Anspruch 10, wobei der Halsabschnitt (110) einen Außendurchmesser hat, der gleich dem oder kleiner als der Außendurchmesser (4e) des Gewindeabschnitts (120) ist.

12. Das Implantat auf Gewebeebene gemäß Anspruch 10 oder 11, wobei der Halsabschnitt (110) ein Gewinde (112) entlang zumindest einem Teil seiner Länge in Form von Mikrogewinden hat, um den Knochenerhalt und die Osseointegration zu verbessern.

## Revendications

1. Implant de niveau tissulaire (100) comportant une section lisse (1110) et une section de corps (110, 120) qui sont continues l'une à l'autre, la section lisse (1110) définissant l'extrémité proximale de l'implant (100) et la section de corps (110, 120) définissant l'extrémité distale de l'implant (100), la section de corps (110, 120) étant conçue comme une surface d'apposition de tissu osseux,
a) ladite section de corps (110, 120) comportant une portion filetée (120) ayant un noyau intérieur (120c) muni d'un filetage (124) s'étendant à partir de celui-ci sur sa longueur, ledit noyau (120c) définissant un diamètre interne de ladite portion filetée (120) et ledit filetage (124) définissant le diamètre externe de ladite portion filetée (120),
b) dans lequel ledit noyau (120c) est continu le long de la longueur de ladite portion filetée (120) et a un diamètre décroissant de telle sorte que le diamètre proximal dudit noyau (120c) est plus grand que le diamètre distal dudit noyau (120c), le noyau (120c) étant sensiblement plat à une extrémité apicale (100d) de l'implant dentaire (100),
dans lequel le filetage (124) dudit noyau (120c) inclut au moins un filet (124) s'étendant à partir de celui-ci le long de la longueur de ladite portion filetée (120), dans lequel chaque filet (124) comporte un côté apical (124a), un côté coronaire (124c), et un bord latéral (124f) reliant le côté apical (124a) et le côté coronaire (124c), une base (124b) reliant le filet (124) au noyau (120c), une profondeur de filet définie entre le bord latéral (124f) et la base (124b), et dans lequel ledit au moins un filet (124) a une profondeur variable qui augmente le long de la longueur d'au moins un segment (120a, 120b) de ladite portion filetée (120) dans une direction apicale, de sorte que la plus petite profondeur du filet (124) est adjacente à l'extrémité proximale dudit segment de la portion filetée (120) et la plus grande profondeur de chaque filet (124) est adjacente à l'extrémité apicale dudit segment de la portion filetée (120), **caractérisé en ce que** la section lisse (1110) comporte une section évasée vers l'extérieur (1110c) s'élargissant dans la direction coronaire de telle sorte que l'extrémité coronaire de la section évasée vers l'extérieur a un rayon plus grand que l'extrémité coronaire de la section de corps, et **en ce que** la section lisse (1110) est conçue comme une surface d'apposition de tissus mous.

2. Implant de niveau tissulaire selon la revendication 1, dans lequel ledit au moins un filet (124) a une profondeur variable qui augmente le long de la longueur complète de ladite portion de corps filetée (120) dans une direction apicale, de sorte que la plus petite profondeur du filet (124) est adjacente à l'extrémité proximale (120p) de la portion filetée (120) et la plus grande profondeur de chaque filet (124) est adjacente à l'extrémité apicale (100d) de la portion filetée (120).

3. Implant de niveau tissulaire selon la revendication 1 ou 2, dans lequel l'extrémité apicale (100d) comporte au moins une pointe de bord avant coupant (126e) s'étendant à partir du noyau (120c) précédant le début de chacun desdits filets (124), dans lequel ladite pointe de bord avant coupant (126e) permet de stabiliser ledit implant à l'intérieur d'un os.

4. Implant de niveau tissulaire selon la revendication 1, 2 ou 3, dans lequel le filetage (124) a une largeur variable qui augmente le long de ladite portion filetée (120) dans une direction coronaire de sorte que la plus petite largeur du bord latéral (124f) du filet est adjacente à l'extrémité apicale (100d) de l'implant dentaire (100) et la plus grande largeur du bord latéral du filetage est adjacente à l'extrémité proximale (120p) de la portion filetée (120).

5. Implant de niveau tissulaire selon l'une quelconque des revendications 1 à 4, dans lequel le au moins un filet (124) comporte à la fois sur son côté apical (124a) et son côté coronaire (124c) au moins une modification de contour (140) le long de l'axe horizontal de filet (30a) dans celui-ci définissant au moins deux sous-segments (142, 144) le long de l'axe horizontal.

6. Implant de niveau tissulaire selon une ou plusieurs des revendications précédentes, dans lequel ledit filetage (124) comporte en outre au moins deux évidements longitudinaux le long de la longueur de ladite portion filetée (120) dans celui-ci définissant au moins deux cannelures (122) définies le long de toute la longueur de ladite portion filetée (120), lesdites cannelures (122) étant configurées pour collecter de l'os lorsque l'implant dentaire (100) tourne et pour avoir une ouverture proximale (122o) adjacente à ladite extrémité proximale (120p) de ladite portion filetée (120), et dans lequel lesdites au moins deux cannelures (120) sont formées à travers la profondeur dudit filetage (124) entre la base de filet (124b) et le bord latéral de filet (124f), lesdites cannelures (122) ayant un profil formant un évidement ovoïde (122r) le long de ladite base de filet (124b) et un col (122n) formé le long dudit bord latéral de filet (124f).

7. Implant de niveau tissulaire selon une ou plusieurs des revendications précédentes, dans lequel la section lisse (1110) comporte une section évasée vers l'extérieur (1110c) ayant une forme analogue à une tulipe, suivie d'une section cylindrique circulaire (1110d) suivie d'une partie biseautée (1110a) ayant un contour de cône tronqué suivi d'un épaulement plat (1110b) qui définit l'extrémité proximale (100p) de l'implant dentaire (100).

8. Implant de niveau tissulaire selon une ou plusieurs des revendications précédentes, dans lequel la section lisse (1110) est usinée pour avoir une surface polie et la section de corps (110, 120) est sablée et/ou mordancée.

9. Implant de niveau tissulaire selon une ou plusieurs des revendications précédentes, dans lequel l'implant (100) inclut :
un alésage borgne interne pour un raccordement à une partie secondaire, l'alésage borgne interne s'étendant dans une direction axiale de l'implant et incluant : une section de stabilisation (160) qui s'étend apicalement à partir de l'extrémité coronaire de l'implant dentaire et une section d'entraînement et d'indexage (170) qui s'étend apicalement à partir d'une extrémité apicale de la section de stabilisation (160),
dans lequel la section d'entraînement et d'indexage (170) est pourvue d'une pluralité de lobes de liaison (171) ayant une forme concave et s'étendant dans la direction longitudinale, les lobes de liaison (171) étant interconnectés par des zones de jonction de lobes (172) respectives s'étendant également dans la direction longitudinale, chacune des zones de jonction de lobes (172) incluant : deux sections convexes (174) s'étendant dans la direction longitudinale et adjacentes à un lobe de liaison (171) respectif, et une section concave (175) s'étendant dans la direction longitudinale entre les deux sections convexes (174).

10. Implant de niveau tissulaire selon une ou plusieurs des revendications précédentes, dans lequel la section de corps (110, 120) comporte en outre une portion de col (110) directement adjacente à l'extrémité proximale (120p) de la portion filetée (120) et à l'extrémité apicale de la section lisse (1110).

11. Implant de niveau tissulaire selon la revendication 10, dans lequel la portion de col (110) a un diamètre extérieur égal ou inférieur au diamètre externe (4e) de la portion filetée (120).

12. Implant de niveau tissulaire selon la revendication 10 ou 11, dans lequel la portion de col (110) comporte un filetage (112) le long d'au moins une partie de sa longueur sous la forme de micro-filets pour améliorer la rétention osseuse et l'ostéo-intégration.
